# EUROPÄISCHE PATENTSCHRIFT

(11) **EP 3 656 810 B1**
(45) Veröffentlichungstag und Bekanntmachung des Hinweises auf die Patenterteilung: **16.06.2021**
(21) Anmeldenummer: 19208810.2
(22) Anmeldetag: 13.11.2019
(51) Int. Cl.: C08J 7/04

(54) **VERFAHREN ZUR HERSTELLUNG EINES FENSTER- ODER TÜR-HOHLKAMMERPROFILES**
METHOD FOR PRODUCING A HOLLOW WINDOW OR DOOR PROFILE
PROCÉDÉ DE FABRICATION D'UN PROFILÉ DE CHAMBRE CREUSE DE FENÊTRE OU DE PORTE

(30) Priorität: 23.11.2018 DE 102018129558
(43) Veröffentlichungstag der Anmeldung: 27.05.2020
(73) Patentinhaber: REHAU AG + Co, 95111 Rehau (DE)
(72) Erfinder: Boersch, Mike, 26409 Wittmund-Asel (DE)

(56) Entgegenhaltungen:
- DE-A1-102007 004 229
- DE-A1-102011 076 959
- DE-A1-102013 107 746

## Beschreibung

Die Erfindung betrifft ein Verfahren zur Herstellung eines Fenster- oder Tür-Hohlkammerprofiles, wobei im Wege eines Kunststoff-Extrusionsverfahrens die Formgebung eines mindestens eine Hohlkammer aufweisenden Strukturprofils des Hohlkammerprofils erfolgt.

Im Stand der Technik ist es bekannt, bei der Herstellung von Kunststoffprofilen für Tür- bzw. Fensterrahmen ein extrudiertes Strukturprofil mit minderer Oberflächengüte im Wege der Coextrusion zu beschichteten, um optisch einwandfreie und gleichzeitig leicht zu reinigende Sichtoberflächen des Hohlkammerprofils zu erhalten. So kann beispielsweise das Strukturprofil zur Verbesserung der mechanischen Belastbarkeit aus faserverstärktem Kunststoff bestehen und hierdurch gewisse Unebenheiten aufgrund von an der Oberfläche befindlichen Verstärkungsfasern aufweisen. Um hier eine einwandfreie Oberfläche zu erzielen, schlägt beispielsweise die EP 2 191 090 B1 vor, das Verstärkungsfasern enthaltende Strukturprofil mit einer dünnen Oberflächenschicht zu coextrudieren, welche frei von Verstärkungsfasern ist.

Ein weiteres großes Anwendungsgebiet, bei welchem die oben beschriebene Maßnahme ebenfalls eingesetzt wird, ist die Herstellung von Hohlkammerprofilen für Fenster und Türen mithilfe von Recyclatmaterial, da dieses in der Regel nicht über dieselbe Qualität wie beispielsweise erstmalig verarbeiteter PVC-Rohstoff verfügt.

Nachteilig bei den beschriebenen Verfahren zur Oberflächenbeschichtung ist, dass eine Coextrusion das Fertigungsverfahren deutlich komplexer macht und dadurch auch die möglichen Prozessgeschwindigkeiten limitiert.

Aus der DE 10 2012 210 645 A1 ist es bekannt, die Haltbarkeit von Fensterprofilen, welche in sogenannten Heißländern mit sehr starker Sonneneinstrahlung eingesetzt werden sollen, mit einer einen UV-Absorber aufweisenden Lackierung zu verbessern.

Die DE 10 2007 004 229 A1 offenbart die Beschichtung eines extrudierten Kunststoffprofils, welches insbesondere als Winkelprofil oder Kantenleiste zur Dekoration von Möbelstücken zum Einsatz kommt. Die DE 10 2011 076 959 A1 beschreibt ein Verfahren zur Lackierung einer Dachzierleiste für ein Kraftfahrzeug. Aus der DE 10 2013 107 746 A1 ist eine mehrfache Lackierung von Kunststoff-Fensterprofilen bekannt.

Der Erfindung liegt die Aufgabe zugrunde, ein Verfahren zur Herstellung eines Fenster- oder Tür-Hohlkammerprofils mit den eingangs beschriebenen Merkmalen anzugeben, mit dem sich auf einfache Weise eine signifikante Verbesserung des optischen Erscheinungsbildes sowie eine leichtere Reinigung des Hohlkammerprofils erzielen lässt und das dabei gleichzeitig hohe Produktionsgeschwindigkeiten erlaubt.

Erfindungsgemäß wird diese Aufgabe gelöst durch ein Verfahren zur Herstellung eines Fenster- oder Tür-Hohlkammerprofiles mit den Merkmalen des Patentanspruchs 1. Insbesondere kann nach dem Lackiervorgang die Class-A-Oberfläche einen visuellen Glanzeindruck von mindestens 10, zum Beispiel mindestens 11 oder mindestens 12 aufweisen. Der visuelle Glanzeindruck kann beispielsweise gemäß der DIN EN ISO 2813 vom Februar 2015 bestimmt werden. Diese DIN-Norm beschreibt u.a. technische Verfahren zur Bestimmung des visuellen Glanzeindrucks. In Bild 1 der DIN-Norm sind visuelle Glanzeindrücke 1 bis 13 in Abhängigkeit von gemessenen Glanzeinheiten (GU) im Bereich von 0 bis 100 dargestellt, die mittels eines geeigneten Glanzmessgerätes, beispielsweise dem Gerät "Rhopoint IQ" von der Firma Rhopoint Instruments Limited, St. Leonards-on-Sea, UK, auf unterschiedliche Weise in Abhängigkeit vom Einfallswinkel der Lichtquelle gemessen werden können. Gemäß Bild 1 entspricht der visuelle Glanzeindruck 9 beispielsweise 35 gemessenen Glanzeinheiten (GU) bei einem Messwinkel des Messgeräts (s. Bild 2) von 20°, 70 GU bei 60° und 95 GU bei 85°. Ein Glanzeindruck von 11 hingegen entspricht 64 GU bei 20°, 90 GU bei 60° und 98 GU bei 85°. Anhand Bild 1 ist erkennbar, dass insbesondere im hochglänzenden Bereich die Messmethode bei 20° aufgrund der entsprechend hohen Sensibilität der Messwerte sehr aussagekräftig ist. D.h. bereits geringe Änderungen im visuellen Glanzeindruck haben große Veränderungen bei den gemessenen Glanzwerten (GU) zufolge. Der visuelle Glanzwert, welcher von 1 = stumpf-matt bis 13 = hochglänzend reicht, kann somit gemäß der Norm mittels geeigneter Glanzmessgeräte technisch exakt bestimmt werden. Die Begriffe "Class-A-Oberfläche" bzw. (nachstehend verwendet) "Class-B-Oberfläche" sind beispielsweise auch im Automobilbereich gebräuchlich und meinen hier im Rahmen der Erfindung, dass eine Class-B-Oberfläche nicht den Oberflächenanforderungen an eine Sichtseite eines Tür- bzw. Fensterprofils genügt, eine Class-A-Oberfläche hingegen schon.

Die Erfindung beruht auf der Erkenntnis, dass mittels eines Lackiervorgangs einerseits an der entsprechend behandelten Sichtseite des Strukturprofils die gewünschte Oberflächengüte hinsichtlich Glanz, Reinigungsfähigkeit, Schmutzunempfindlichkeit etc. hergestellt werden kann und dabei andererseits eine Lackierung mit wesentlich höherer Prozessgeschwindigkeit erfolgen kann als die bekannte Maßnahme Coextrusion. Im Rahmen der Erfindung liegt es daher insbesondere auch, dass die Kunststoff-Matrix des Strukturprofils frei von Zusatzstoffen ist, die den visuellen Glanzeindruck erhöhen (z.B. Kreide oder dergl.).

Erfindungsgemäß weist die Sichtseite des Strukturprofils vor dem Lackiervorgang eine Class-B-Oberfläche mit einem visuellen Glanzeindruck auf, der mindestens 1 Einheit, vorzugsweise mindestens 2 Einheiten, beispielsweise mindestens 3 Einheiten, z.B. mindestens 4 Einheiten unterhalb des visuellen Glanzeindrucks der Sichtseitenoberfläche nach dem Lackiervorgang liegt. Damit einher geht also entsprechend, dass mittels des Lackiervorgangs Unebenheiten an der Oberfläche des Strukturprofils im Bereich der Sichtseite derart nachhaltig ausgeglichen werden, dass eine substantielle Verbesserung der Oberflächengüte erreicht und somit hierdurch der Übergang von einer Class-B-Oberfläche zu einer Class-A-Oberfläche vollzogen werden kann.

Das Lackiermaterial enthält zweckmäßigerweise Farbpigmente, z.B. Weißpigmente (Titandioxid oder dergl.), so dass durch den Auftrag des Lackiermaterials gleichzeitig eine gezielte, vorzugsweise blickdichte, Einfärbung der mindestens einen Sichtseite des Strukturprofils erfolgt. Dies hat den Vorteil, dass die gewünschte Farbgebung realisiert werden kann, ohne dass das gesamte Strukturprofil im Querschnitt gesehen entsprechend durchgefärbt werden muss. Dies ist insbesondere vor dem Hintergrund relevant, dass das in der Kunststoffextrusion häufig eingesetzte Weißpigment Titandioxid (sowie auch andere hier üblicherweise eingesetzte Farbpigmente) vergleichsweise teuer ist.

Das Strukturprofil wird aus Recyclat-Material hergestellt. Ergänzend liegt es im Rahmen der Erfindung, dass in die Kunststoff-Matrix des Strukturprofils Verstärkungsfasern integriert sind, so wie dies beispielsweise in der schon zitierten EP 2 191 090 B1 der Fall ist. Als Verstärkungsfasern kommen insbesondere Kurzfasern (bspw. Glas- und/oder Kohlenstoff- und/oder Aramidfasern) mit einer durchschnittlichen Faserlänge von maximal 20 mm, z.B. maximal 10 mm infrage.

Zweckmäßigerweise wird die Lackierung lediglich an der mindestens einen Sichtseite des Strukturprofils aufgebracht. So können z.B. insbesondere die ins Mauerwerk einzupassenden umlaufenden Stirnseiten eines Tür- oder Fensterblendrahmens unlackiert bleiben, da diese Stirnseiten im eingebauten Zustand der Tür bzw. des Fensters nicht sichtbar sind. Im Rahmen der Erfindung liegt es jedoch auch, dass die gesamte äußere Oberfläche des Strukturprofils mit der Lackierung versehen wird.

Vorzugsweise wird das Lackiermaterial nass auf die Oberfläche der Sichtseite aufgetragenen. Hierdurch besitzt das Lackiermaterial bei seiner Applikation eine ausgeprägte Fließfähigkeit, so dass es auch in kleinste Vertiefungen der Sichtseite eindringen und damit entsprechende Unebenheiten substanziell ausgleichen kann. Beim Nasslackieren wird das Lackiermaterial in flüssiger Form auf die entsprechende Oberfläche aufgetragen und durch chemische und/oder physikalische Vorgänge (beispielsweise Verdampfen eines Lösungsmittels) zu einer homogenen, festen Oberflächenschicht aufgebaut. Eine Pulverlackierung soll hierdurch jedoch nicht ausgeschlossen sein. Das Lackiermaterial kann wasserbasiert oder aber auch lösungsmittelbasiert sein. Zweckmäßigerweise enthält das Lackiermaterial als Bindemittel ein Polyurethanharz, ein Polyesterharz oder ein Epoxidharz. Das Lackiermaterial kann z.B. auf die Sichtseite aufgespritzt oder aufgesprüht werden, beispielsweise mittels Druckzerstäuber. Im Rahmen der Erfindung liegt jedoch auch eine Tauchlackierung. Die Schichtstärke des fertig ausgehärteten Lackiermaterials beträgt erfindungsgemäß 100 bis 700 µm, vorzugsweise 200 bis 500 µm. Zweckmäßigerweise wird das auf das Strukturprofil aufgetragene Lackiermaterial in einem separaten Behandlungsvorgang ausgehärtet (z.B. mittels UV-Strahlung).

Grundsätzlich können verschiedenste Kunststoffe zur Extrusion des Strukturprofils eingesetzt werden. Vorzugsweise wird das Strukturprofil jedoch mit Hilfe von PVC-Material extrudiert.

Zweckmäßigerweise erfolgt der Lackiervorgang und ggf. auch der Behandlungsvorgang zur Aushärtung des Lackiermaterials in einem kontinuierlichen, insbesondere stationären Prozess, vorzugsweise online mit der Extrusion des Strukturprofils.

Im Rahmen der Erfindung liegt es ferner auch, dass der Lackiervorgang an der mindestens einen Sichtseite des Strukturprofils mit einer Aufkaschierung einer, vorzugsweise blickdichten, Kaschierfolie auf mindestens eine weitere Sichtseite des Strukturprofils kombiniert wird. Zweckmäßigerweise werden auch mittels der Kaschierfolie Unebenheiten an der entsprechenden Sichtseite derart ausgeglichen, dass diese nach dem Kaschiervorgang eine Class-A-Oberfläche mit einem visuellen Glanzeindruck von mindestens 5, z.B. mindestens 6, vorzugsweise mindestens 8, aufweist. Vorzugsweise beträgt der visuelle Glanzeindruck nach der Kaschierung mindestens 10, zum Beispiel mindestens 11 oder mindestens 12. Auch hier gilt wiederum vorzugsweise, dass die entsprechende Sichtseite des Strukturprofils vor dem Kaschiervorgang eine Class-B-Oberfläche mit einem visuellen Glanzeindruck aufweist, der mindestens 1 Einheit, vorzugsweise mindestens 2 Einheiten, beispielsweise mindestens 3 Einheiten, z.B. mindestens 4 Einheiten unterhalb des visuellen Glanzeindrucks der Sichtseitenoberfläche nach dem Kaschiervorgang liegt. Die Kaschierfolie kann weiß oder aber auch beispielsweise gelb, rot, grün oder blau eingefärbt sein. Die Schichtstärke der Kaschierfolie beträgt z.B. 100 bis 700 µm, vorzugsweise 200 bis 500 µm. Ein Vorteil der Kombination von Lackierung und Kaschierung liegt auch darin, dass aufgrund der Lackierung von Sichtseiten, die nicht mit einer Kaschierfolie versehen werden, eine Zugabe von den visuellen Glanzeindruck erhöhenden Mitteln in das Rohmaterial des Strukturprofils entbehrlich ist. Diese Mittel erschweren bekanntermaßen die Haftung von Kaschierfolien auf dem Strukturprofil. Die Kaschierung kann nach der Lackierung (und ggf. Aushärtung des Lackiermaterials) erfolgen, alternativ aber auch davor. Zweckmäßigerweise wird die mindestens eine Kaschierfolie an der bewitterten und daher höher beanspruchten Außenseite des Strukturprofils angebracht und die Lackierung an der Innenseite des Strukturprofils aufgetragen. Die umgekehrte Vorgehensweise oder aber auch eine anderweitige Kombination werden hierdurch jedoch nicht ausgeschlossen. Die Kaschierung kann online mit der Extrusion erfolgen, aber auch offline.

Gegenstand der Erfindung ist ferner ein Fenster- oder Tür-Hohlkammerprofil, welches mittels des vorstehend beschriebenen, erfindungsgemäßen Verfahrens hergestellt wird.

Im Folgenden wird die Erfindung anhand einer lediglich ein Ausführungsbeispiel darstellenden Zeichnung erläutert. Es zeigen schematisch:
- Fig. 1: ein gemäß dem Stand der Technik hergestelltes Hohlkammerprofil,
- Fig. 2: ein erfindungsgemäß hergestelltes Hohlkammerprofil,
- Fig. 3: ein erfindungsgemäßes Herstellungsverfahren zur Herstellung des in Fig. 2 dargestellten Hohlkammerprofils,
- Fig. 4: eine alternative Ausführungsform der Erfindung in einer der Fig. 2 entsprechenden Darstellung und
- Fig. 5: ein erfindungsgemäßes Herstellungsverfahren zur Herstellung des in Fig. 4 dargestellten Hohlkammerprofils.

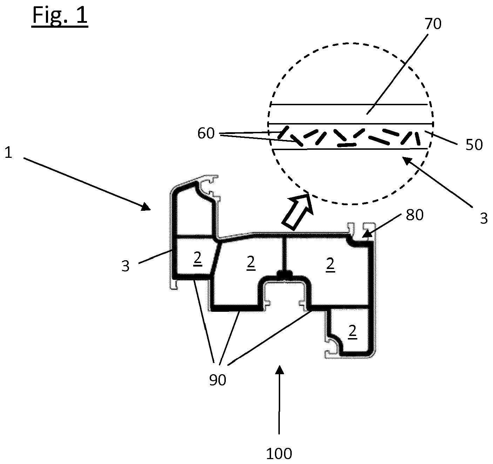

Die Fig. 1 zeigt ein Verfahren zur Herstellung eines Fenster- oder Tür-Hohlkammerprofiles 1 für einen Fenster- oder Türflügelrahmen gemäß dem Stand der Technik. Im Wege eines Kunststoff-Extrusionsverfahrens erfolgt die Formgebung eines mehrere Hohlkammern 2 aufweisenden Strukturprofils 3 des Hohlkammerprofils 1. Anhand des vergrößerten Ausschnitts in der Fig. 1 ist erkennbar, dass das Strukturprofil 3 eine thermoplastische Kunststoff-Matrix 50 aufweist, in die Verstärkungsfasern 60 in Form von Kurzglasfasern mit einer durchschnittlichen Faserlänge von maximal 10 mm integriert sind. Aufgrund dieser Verstärkungsfasern 60 weist das Strukturprofil 3 eine äußere Oberfläche mit Unebenheiten auf, die den Anforderungen an Fenster oder Türrahmen hinsichtlich Optik, Reinigungsmöglichkeiten, Schmutzunempfindlichkeit etc. nicht entspricht. Aus diesem Grund ist beim Stand der Technik gemäß Figur 1 das Strukturprofil 3 im Wege der Coextrusion mit einer - im vergrößerten Ausschnitt übertrieben dargestellten - äußeren Beschichtung 70 aus thermoplastischem Kunststoff ohne Verstärkungsfasern versehen worden. Diese äußere Beschichtung wird jedoch nicht auf die gesamte äußere Oberfläche des Strukturprofils 3 aufgetragen. So bleiben z.B. der Nutgrund 80 der rechten Aufnahmenut ebenso wie Bereiche 90 der Unterseite 100 des Strukturprofils 3 unbeschichtet.

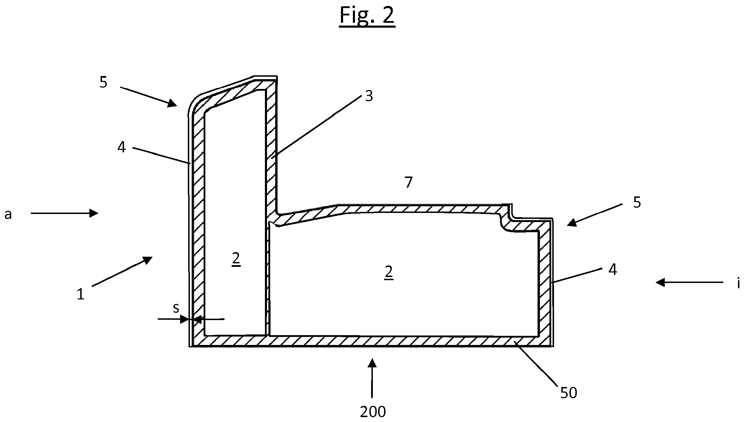

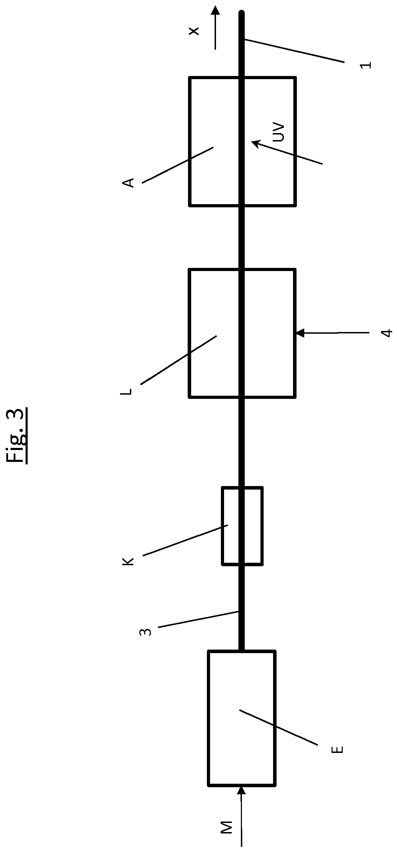

Fig. 2 zeigt ein erfindungsgemäß hergestelltes Fenster- oder Tür-Hohlkammerprofil 1 für einen Fenster- oder Türblendrahmen. Auch hier erfolgt im Wege eines Kunststoff-Extrusionsverfahrens zunächst die Formgebung eines mehrere Hohlkammern 2 aufweisenden Strukturprofils 3 des Hohlkammerprofils 1. Im Ausführungsbeispiel wird das Strukturprofil 3 aus PVC-Recyclat-Material M (vergl. Fig. 3) extrudiert. Das Strukturprofil 3 weist somit entsprechende (nicht näher dargestellte) Unebenheiten an seiner Oberfläche auf. Danach wird mittels eines Lackiervorgangs Lackiermaterial 4 nass auf zwei besagte Unebenheiten aufweisende Sichtseiten 5 des Strukturprofils 3 aufgetragen, wobei sich hiervon eine Sichtseite 5 an der bewitterten Außenseite a und eine weitere Sichtseite 5 an der Innenseite i des Strukturprofils 3 befindet. Durch das Lackiermaterial 4 werden die Unebenheiten an der Oberfläche der Sichtseiten 5 derart ausgeglichen, dass diese nach dem Lackiervorgang eine Class-A-Oberfläche mit einem visuellen Glanzeindruck von mindestens 9 aufweisen. Vor dem Lackiervorgang weisen die Sichtseiten 5 des Strukturprofils 3 hingegen eine Class-B-Oberfläche mit einem visuellen Glanzeindruck auf, der mindestens 2 Einheiten unterhalb des visuellen Glanzeindrucks nach dem Lackiervorgang liegt. Das nass aufgetragene Lackiermaterial 4 wird anschließend in einem separaten Behandlungsvorgang mit UV-Licht ausgehärtet, so dass es auf der Oberfläche der Sichtseiten 5 eine feste Überzugsschicht bildet. Es ist erkennbar, dass die Lackierung 4 lediglich gezielt an den beiden Sichtseiten 5 des Strukturprofils 3 aufgebracht wird und z.B. die dem Mauerwerk zugewandte Stirnseite 200 des Strukturprofils 3 unbeschichtet bleibt. Das Lackiermaterial 4 kann als Bindemittel beispielsweise ein Polyurethanharz, ein Polyesterharz oder ein Epoxidharz enthalten. Die Schichtstärke s des fertig ausgehärteten Lackiermaterials 4 beträgt im Ausführungsbeispiel 200 bis 500 µm.

Das Lackiermaterial 4 enthält ferner (nicht näher dargestellte) Weißpigmente in Form von Titandioxid-Partikeln, so dass durch den Auftrag des Lackiermaterials 4 gleichzeitig eine gezielte blickdichte Einfärbung der Sichtseiten 5 des Strukturprofils 3 erfolgt. Dies hat den Vorteil, dass die gewünschte Farbgebung realisiert werden kann, ohne dass das gesamte Strukturprofil 3 im Querschnitt gesehen entsprechend durchgefärbt werden muss. Dies ist insbesondere vor dem Hintergrund relevant, dass das in der Kunststoffextrusion häufig eingesetzte Weißpigment Titandioxid vergleichsweise teuer ist.

Fig. 3 zeigt schematisch einen erfindungsgemäßen Prozess zur Herstellung des in Fig. 2 gezeigten Hohlkammerprofils 1. Es ist erkennbar, dass mittels eines Extruders E aus dem PVC-Recyclatmaterial M das Strukturprofil 3 hergestellt wird, welches danach zunächst in einer Kalibriervorrichtung K kalibriert wird. Hieran anschließend erfolgt online mit der Extrusion, also in einem ebenfalls kontinuierlichen Prozess der Lackiervorgang in einer stationären Lackierstation L, wobei hier das Lackiermaterial 4 vorzugsweise auf das noch durch die Extrusion erwärmte, mit der Extrusionsgeschwindigkeit x die Lackierstation L durchlaufende Strukturprofil 3 aufgetragen wird, um die Anbindung des Lackiermaterials 4 an die Oberfläche der entsprechenden Sichtsteiten 5 zu verbessern. Das Lackiermaterial kann in der Lackierstation L z.B. mittels eines (nicht dargestellten) Druckzerstäubers auf die Sichtseiten 5 aufgesprüht werden. Der Lackierung nachgeschaltet erfolgt in einem kontinuierlichen Prozess ebenfalls online mit der Extrusion in einer Aushärtungsstation A ein Behandlungsvorgang zur Aushärtung des Lackiermaterials 4 mit UV-Licht UV. Sodann verlässt das fertig hergestellte Hohlkammerprofil 1 die Aushärtungsstation A.

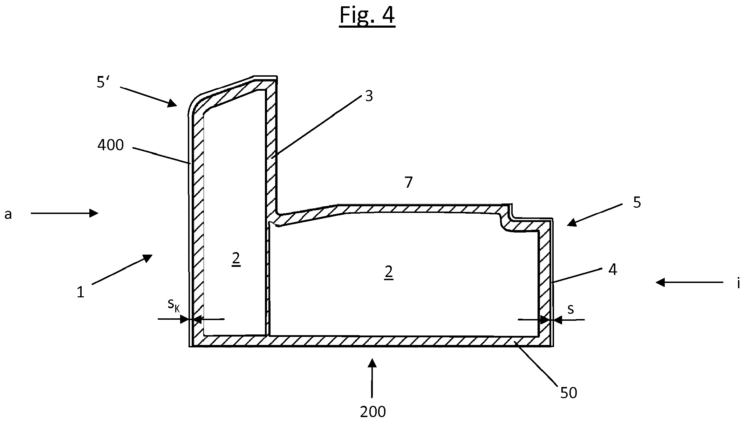

Beim Ausführungsbeispiel gemäß Fig. 4 wird der Lackiervorgang an der Sichtseite 5 (welche sich an der Innenseite i befindet) des Strukturprofils 3 mit einer Aufkaschierung einer blickdichten, weißen Kaschierfolie 400 auf eine weitere Sichtseite 5' an der bewitterten Außenseite a des Strukturprofils 3 kombiniert. Auch mittels der Kaschierfolie 400 werden Unebenheiten an der entsprechenden Sichtseite 5' derart ausgeglichen, dass diese nach dem Kaschiervorgang eine Class-A-Oberfläche mit einem visuellen Glanzeindruck von mindestens 9 aufweist. Die Kaschierfolie 400 weist eine Schichtstärke S_{K} von 200 bis 500 µm auf. Und auch hier gilt, dass die entsprechende Sichtseite 5' des Strukturprofils 3 vor dem Kaschiervorgang eine Class-B-Oberfläche mit einem visuellen Glanzeindruck aufweist, der mindestens 2 Einheiten unterhalb des visuellen Glanzeindrucks nach dem Kaschiervorgang liegt. Durch die in Fig. 4 dargestellte Kombination von Lackiermaterial 4 und Kaschierfolie 400 kann von einer Zugabe von den visuellen Glanzeindruck erhöhenden Zusatzstoffen (z.B. Kreide) in das Roh- bzw. Recyclat-Material M des Strukturprofils Abstand genommen werden. Diese Zusatzstoffe erschweren bekanntermaßen die Haftung der Kaschierfolie 400 auf dem Strukturprofil 3, so dass sich das vorbeschriebene Verfahren auch durch eine unproblematische Aufkaschierung der Kaschierfolie 400 auszeichnet, die hohe Prozessgeschwindigkeiten erlaubt.

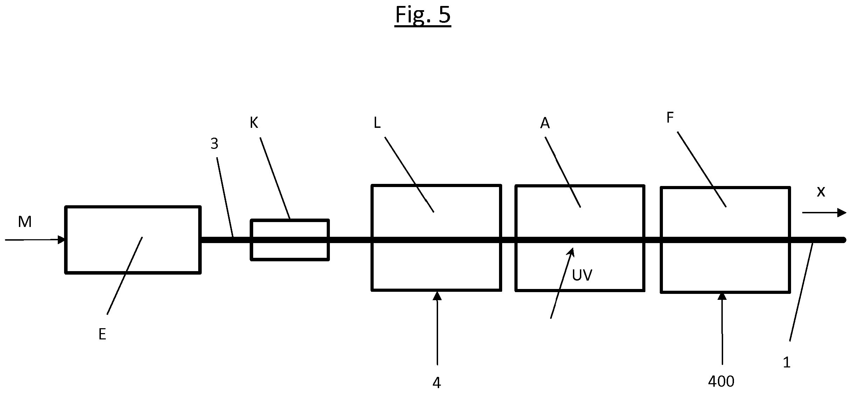

Die Fig. 5 zeigt schematisch den Prozess zur Herstellung des in Fig. 4 gezeigten Hohlkammerprofils 1. Im Vergleich zum in Fig. 3 dargestellten Prozess wird hier anschließend an die Aushärtung des - in der Lackierstation L auf die Sichtseite 5 aufgetragenen - Lackiermaterials 4 in der Aushärtungsstation A zusätzlich in einer der Aushärtungsstation A nachgeschalteten Folienkaschierstation F in einem kontinuierlichen Verfahren online mit der Extrusion die Kaschierfolie 400 auf die Sichtseite 5' des Strukturprofils 3 aufgetragen. Anschließend verlässt das fertig hergestellte Hohlkammerprofil 1 die Folienkaschierstation F. Im Rahmen der Erfindung liegt es allerdings auch, dass die Kaschierfolie 400 vor dem Lackiermaterial 4 aufgetragen wird, also die Station F den Stationen L und A vorgeschaltet ist.

## Patentansprüche

1. Verfahren zur Herstellung eines Fenster- oder Tür-Hohlkammerprofiles (1),
- wobei im Wege eines Kunststoff-Extrusionsverfahrens die Formgebung eines mindestens eine Hohlkammer (2) aufweisenden Strukturprofils (3) des Hohlkammerprofils (1) erfolgt,
- wobei das Strukturprofil (3) aus Recyclat-Material hergestellt wird,
- wobei danach mittels eines Lackiervorgangs Lackiermaterial (4) mit einer Schichtstärke (s) von 100 bis 700 µm auf mindestens eine Unebenheiten aufweisende Sichtseite (5) des Strukturprofils (3) aufgetragen wird, und
- wobei durch das Lackiermaterial (4) die Unebenheiten an der Oberfläche der Sichtseite (5) derart ausgeglichen werden, dass diese nach dem Lackiervorgang eine Class-A-Oberfläche mit einem visuellen Glanzeindruck von mindestens 5, z.B. mindestens 6, vorzugsweise mindestens 8, aufweist, und
- wobei die Sichtseite (5) des Strukturprofils (3) vor dem Lackiervorgang eine Class-B-Oberfläche mit einem visuellen Glanzeindruck aufweist, der mindestens 1 Einheit, vorzugsweise mindestens 2 Einheiten unterhalb des visuellen Glanzeindrucks nach dem Lackiervorgang liegt.

2. Verfahren nach Anspruch 1, **dadurch gekennzeichnet, dass** die Kunststoff-Matrix (50) des Strukturprofils (3) frei von Zusatzstoffen ist, die den visuellen Glanzeindruck erhöhen.

3. Verfahren nach Anspruch 1 oder 2, **dadurch gekennzeichnet, dass** das Lackiermaterial (4) Farbpigmente enthält, so dass durch den Auftrag der Lackierschicht (4) gleichzeitig eine, vorzugsweise blickdichte, Einfärbung der mindestens einen Sichtseite (5) des Strukturprofils (3) erfolgt.

4. Verfahren nach Anspruch 3, **dadurch gekennzeichnet, dass** als Farbpigmente Weißpigmente, insbesondere Titandioxid-Partikel verwendet werden.

5. Verfahren nach einem der Ansprüche 1 bis 4, **dadurch gekennzeichnet, dass** in die Kunststoff-Matrix des Strukturprofils (3) Verstärkungsfasern, insbesondere Kurzfasern mit einer durchschnittlichen Faserlänge von maximal 20 mm, integriert sind.

6. Verfahren nach einem der Ansprüche 1 bis 5, **dadurch gekennzeichnet, dass** das Lackiermaterial (4) lediglich an der mindestens einen Sichtseite (5) des Strukturprofils (3) aufgebracht wird.

7. Verfahren nach einer der Ansprüche 1 bis 6, **dadurch gekennzeichnet, dass** das Lackiermaterial (4) nass auf die Oberfläche der Sichtseite (5) aufgetragenen wird.

8. Verfahren nach einem der Ansprüche 1 bis 7, **dadurch gekennzeichnet, dass** das Lackiermaterial (4) als Bindemittel ein Polyurethanharz, ein Polyesterharz oder ein Epoxidharz enthält.

9. Verfahren nach einem der Ansprüche 1 bis 8, **dadurch gekennzeichnet, dass** die Schichtstärke (s) des Lackiermaterials (4) 200 bis 500 µm beträgt.

10. Verfahren nach einem der Ansprüche 1 bis 9, **dadurch gekennzeichnet, dass** das auf das Strukturprofil (3) aufgetragene Lackiermaterial (4) in einem separaten Behandlungsvorgang ausgehärtet wird.

11. Verfahren nach einem der Ansprüche 1 bis 10, **dadurch gekennzeichnet, dass** der Lackiervorgang und ggf. der Behandlungsvorgang zur Aushärtung des Lackiermaterials (4) in einem kontinuierlichen Prozess, vorzugsweise online mit der Extrusion des Strukturprofils (3) erfolgt.

12. Verfahren nach einem der Ansprüche 1 bis 11, **dadurch gekennzeichnet, dass** der Lackiervorgang an der mindestens einen Sichtseite (5) des Strukturprofils (3) mit einer Aufkaschierung einer, vorzugsweise blickdichten, Kaschierfolie (400) auf mindestens eine weitere Sichtseite (5') des Strukturprofils (3) kombiniert wird.

13. Fenster- oder Tür-Hohlkammerprofil (1) hergestellt mit einem Verfahren nach einem der Ansprüche 1 bis 12.

## Claims

1. A method of producing a hollow window or door profile (1),
- wherein the shaping of a structural profile (3) of the hollow chamber profile (1) having at least one hollow chamber (2) takes place by means of a plastics extrusion process,
- wherein the structural profile (3) is produced from recycled material,
- wherein painting material (4) with a layer thickness (s) of 100 to 700 µm is then applied by a painting process to at least one visible side (5) of the structural profile (3) that exhibits irregularities, and
- wherein the irregularities on the surface of the visible side (5) are evened out by the painting material (4) in such a way that, after the painting process, said visible side has a Class A surface with a visually perceived gloss of at least 5, e.g. at least 6, preferably at least 8, and
- wherein before the painting process the visible side (5) of the structural profile (3) has a Class B surface with a visually perceived gloss that is at least 1 unit, preferably at least 2 units, lower than the visually perceived gloss after the painting process.

2. The method according to claim 1, **characterised in that** the plastics matrix (50) of the structural profile (3) is free from additives that enhance the visually perceived gloss.

3. The method according to claim 1 or 2, **characterised in that** the painting material (4) contains coloured pigments such that, as a result of the application of the paint layer (4), a preferably opaque colouring of the at least one visible side (5) of the structural profile (3) simultaneously takes place.

4. The method according to claim 3, **characterised in that** white pigments, in particular titanium dioxide particles, are used as the coloured pigments.

5. The method according to one of claims 1 to 4, **characterised in that** reinforcing fibres, in particular chopped fibres with an average fibre length of no more than 20 mm, are integrated in the plastics matrix of the structural profile (3).

6. The method according to one of claims 1 to 5, **characterised in that** the painting material (4) is applied only on the at least one visible side (5) of the structural profile (3).

7. The method according to one of claims 1 to 6, **characterised in that** the painting material (4) is applied wet to the surface of the visible side (5).

8. The method according to one of claims 1 to 7, **characterised in that** the painting material (4) contains a polyurethane resin, a polyester resin or an epoxy resin as a binder.

9. The method according to one of claims 1 to 8, **characterised in that** the layer thickness (s) of the painting material (4) is 200 to 500 µm.

10. The method according to one of claims 1 to 9, **characterised in that** the painting material (4) that is applied to the structural profile (3) is cured in a separate treatment process.

11. The method according to one of claims 1 to 10, **characterised in that** the painting process and, if applicable, the treatment process for curing the painting material (4) take place in a continuous process, preferably inline with the extrusion of the structural profile (3).

12. The method according to one of claims 1 to 11, **characterised in that** the painting process on the at least one visible side (5) of the structural profile (3) is combined with the laminating of a preferably opaque laminating film (400) on to at least one further visible side (5') of the structural profile (3).

13. A hollow window or door profile (1) produced by a method according to one of claims 1 to 12.

## Revendications

1. Procédé pour fabriquer un profilé à chambres creuses pour fenêtre ou porte (1),
- dans lequel le façonnage d'un profilé de structure (3), présentant au moins une chambre creuse (2), du profilé à chambres creuses (1) est effectué au cours d'un procédé d'extrusion de matière plastique,
- dans lequel le profilé de structure (3) est fabriqué à partir d'un matériau à base de recyclat,
- dans lequel ensuite du matériau de laquage (4) est appliqué au moyen d'une opération de laquage avec une épaisseur de couche (s) de 100 à 700 µm sur au moins un côté visible (5), présentant des irrégularités, du profilé de structure (3), et
- dans lequel les irrégularités sont compensées par le matériau de laquage (4) sur la surface du côté visible (5) de telle manière que celle-ci présente après l'opération de laquage une surface de classe A avec une impression de brillance visuelle d'au moins 5, par exemple d'au moins 6, de préférence d'au moins 8, et
- dans lequel le côté visible (5) du profilé de structure (3) présente avant l'opération de laquage une surface de classe B avec une impression de brillance visuelle, qui se situe au moins 1 unité, de préférence au moins 2 unités sous l'impression de brillance visuelle après l'opération de laquage.

2. Procédé selon la revendication 1, **caractérisé en ce que** la matrice de matière plastique (50) du profilé de structure (3) est sans additifs qui augmentent l'impression de brillance visuelle.

3. Procédé selon la revendication 1 ou 2, **caractérisé en ce que** le matériau de laquage (4) contient des pigments de couleur de sorte que simultanément une coloration, de préférence opaque, de l'au moins un côté visible (5) du profilé de structure (3) est effectuée par l'application de la couche de laquage (4).

4. Procédé selon la revendication 3, **caractérisé en ce que** des pigments blancs, en particulier des particules de titane de dioxyde, sont utilisés en tant que pigments de couleur.

5. Procédé selon l'une quelconque des revendications 1 à 4, **caractérisé en ce que** des fibres de renforcement, en particulier des fibres courtes avec une longueur de fibre moyenne de 20 mm au maximum, sont intégrées dans la matrice de matière plastique du profilé de structure (3).

6. Procédé selon l'une quelconque des revendications 1 à 5, **caractérisé en ce que** le matériau de laquage (4) est appliqué seulement sur l'au moins un côté visible (5) du profilé de structure (3).

7. Procédé selon l'une quelconque des revendications 1 à 6, **caractérisé en ce que** le matériau de laquage (4) est appliqué de manière humide sur la surface du côté visible (5).

8. Procédé selon l'une quelconque des revendications 1 à 7, **caractérisé en ce que** le matériau de laquage (4) contient en tant que liant une résine de polyuréthane, une résine de polyester ou une résine époxy.

9. Procédé selon l'une quelconque des revendications 1 à 8, **caractérisé en ce que** l'épaisseur de couche (s) du matériau de laquage (4) va de 200 à 500 µm.

10. Procédé selon l'une quelconque des revendications 1 à 9, **caractérisé en ce que** le matériau de laquage (4) appliqué sur le profilé de structure (3) est durci lors d'une opération de traitement séparée.

11. Procédé selon l'une quelconque des revendications 1 à 10, **caractérisé en ce que** l'opération de laquage ou l'opération de traitement est effectuée pour faire durcir le matériau de laquage (4) lors d'un processus continu, de préférence en ligne avec l'extrusion du profilé de structure (3).

12. Procédé selon l'une quelconque des revendications 1 à 11, **caractérisé en ce que** l'opération de laquage sur l'au moins un côté visible (5) du profilé de structure (3) est combinée à un contrecollage d'un film de contrecollage (400) de préférence opaque sur au moins un autre côté visible (5') du profilé de structure (3).

13. Profilé à chambres creuses pour fenêtre ou porte (1) fabriqué avec un procédé selon l'une quelconque des revendications 1 à 12.
